# EUROPÄISCHE PATENTSCHRIFT

(11) **EP 1 023 565 B1**
(45) Veröffentlichungstag und Bekanntmachung des Hinweises auf die Patenterteilung: **05.06.2002**
(21) Anmeldenummer: 98955462.1
(22) Anmeldetag: 15.10.1998
(51) Int. Cl.: F25D 23/06

(54) **WÄRMEISOLIERENDE WANDUNG**
HEAT-INSULATING WALL
PAROI CALORIFUGEE

(30) Priorität: 16.10.1997 DE 19745860
(43) Veröffentlichungstag der Anmeldung: 02.08.2000
(73) Patentinhaber: BSH Bosch und Siemens Hausgeräte GmbH, 81669 München (DE)
(72) Erfinder: HIRATH, Jürgen, D-89522 Heidenheim (DE); SCHÜTTE, Markus, D-90409 Nürnberg (DE)
(86) Internationale Anmeldenummer: EP9806555
(87) Internationale Veröffentlichungsnummer: WO9920961

(56) Entgegenhaltungen:
- CH-A- 212 271
- DE-A- 19 520 020
- US-A- 2 000 882
- US-A- 4 715 512

## Beschreibung

Die Erfindung betrifft eine wärmeisolierende Wandung mit zwei äußeren, im Abstand zueinander angeordneten, zumindest weitestgehend vakuumdichten Deckschichten, welche mit einem entlang ihrer Kontur verlaufenden Verbindungsprofil vakuumdicht verbunden sind und welche zusammen mit dem Verbindungsprofil einen evakuierbaren Zwischenraum umschließen, welcher mit evakuierbarem Wärmeisolationsmaterial verfüllt ist, wobei wenigstens eine der Deckschichten einen Durchbruch aufweist, welcher mit einem Rohrabschnitt vakuumdicht verbunden ist. Eine solche Wandung ist z.B. aus der US-A-2 000 882 bekannt.

Es ist bekannt, auf Vakuumtechnik basierende, wärmeisolierende Wandungen und Gehäuse bei Hausgeräten, wie beispielsweise Kühl- und Gefriergeräten und Haushaltsherden zum Aufbau der Herdmuffel einzusetzen. Die für diese Anwendungsgebiete bisher bekannten Wandungen und Gehäuse sind mit rohrartigen Durchführungen ausgestattet, welche beispielsweise dazu dienen, elektrische Anschluß- und Signalleitungen oder das Tauwasser vom Gerätenutzraum, wie beispielsweise einem Gefrier- oder Kühlraum, über die wärmeisolierende Wandung nach außen zu führen. Die dabei zur Anwendung kommenden Durchführungen sind bislang durch ein Rohr gebildet, welches in je eine Bohrung in den äußeren Gehäuseschalen eingefügt und dort außenseitig schweißtechnisch vakuumdicht festgesetzt ist.

Eine derartige Konstruktion hat zur Folge, daß die miteinander zu verbindenden Bauteile mit relativ hoher Paßgenauigkeit ineinandergefügt sein müssen, um ein vakuumdichtes Verschweißen der Verbindungspartner durch herkömmliche Schweißverfahren, wie beispielsweise Mikroplasmaschweißen, auch in der Massenfertigung garantieren zu können. Die in diesem Zusammenhang an die zu verbindenden Bauteile zu stellenden Anforderungen in bezug auf Form- und Maßabweichungen verlangsamen und erschweren den Fertigungsprozeß der Gehäuse und Wandungen, wodurch deren Herstellungskosten deutlich ansteigen. Darüber hinaus ist es bei der bekannten Lösung für eine Durchführung unumgänglich, daß die beiden äußeren Gehäuseschalen mit ihren Durchbrüchen im wesentlichen deckungsgleich übereinander positioniert sein müssen, um aus einem Versatz der Durchbrüche resultierende Spannungen in der Schweißnahtverbindung zu vermeiden. Derartige Spannungen können unter Umständen innerhalb der Brauchbarkeitsdauer eines Gehäuses zu Undichtigkeiten an der Schweißverbindung führen. Des weiteren ist bei der herkömmlichen Durchführungsgestaltung darauf zu achten, möglichst dünnwandige Verbindungsrohre zu verwenden, um die dadurch entstandene Wärmebrücke, bedingt durch die Wärmeleitung des Verbindungsrohres, möglichst gering zu halten, wodurch jedoch nicht nur der Verschweißvorgang des Verbindungsrohres mit den Gehäuseaußenschalen, sondern auch das Handling des Rohres während der Fertigung des Gehäuses deutlich erschwert ist.

Der Erfindung liegt die Aufgabe zugrunde, für eine wärmeisolierende Wandung gemäß dem Oberbegriff des Patentanspruches 1 eine Konstruktion vorzuschlagen, mit welcher mit einfachen, konstruktiven Maßnahmen die Nachteile des Standes der Technik vermieden sind.

Diese Aufgabe wird gemäß der Erfindung dadurch gelöst, daß der Rohrabschnitt an einem seiner beiden Endabschnitte umlaufend mit einer flanschähnlichen Abwinklung versehen ist, mit welcher der Rohrabschnitt an einer der Deckschichten vakuumdicht festgesetzt ist.

Durch die Ausbildung der Durchführung als Rohrelement mit zumindest an einer seiner beiden Stirnseiten angesetzten Flanschflächen ist die Durchführung auch dann an beiden Deckschichten langzeitstabil vakuumdicht in der Serienfertigung mit hoher Prozeßsicherheit festsetzbar, wenn die Durchbrüche in den als Gehäuseschalen dienenden Deckschichten und die Rohröffnung aufgrund irgendwelcher Fertigungs- oder Fügetoleranzen nicht genau fluchten und somit ein gewisser Versatz zwischen den Durchbrüchen in den Gehäuseschalen und den ihnen zugeordneten Rohröffnungen vorhanden ist. Der Flansch an einer der beiden Stirnseiten des Rohrabschnitts ermöglicht dessen prozeßsichere schweißtechnische Befestigung an der Deckschicht, auch wenn das Zentrum des Durchbruches versetzt zum Zentrum des Rohrabschnittes angeordnet ist.

Gemäß einer vorteilhaften Weiterbildung des Gegenstandes der Erfindung ist vorgesehen, daß bei zwischen den mit Durchbrüchen ausgestatteten Deckschichten angeordnetem, die Durchbrüche miteinander verbindendem Rohrabschnitt zur Durchführung von elektrischen Leitungen oder dergleichen der Rohrabschnitt an seinen beiden freien Enden mit einer flanschähnlichen Abwinklung versehen ist, mit welchem der Rohrabschnitt an den einander zugewandten Innenseiten der Deckschichten vakuumdicht festgesetzt ist.

Durch eine solche Ausbildung des Rohrabschnitts kann der die eigentliche Durchführung bildende Rohrabschnitt zur Verminderung der Wärmeverluste, hervorgerufen durch die Wärmeleitung der Durchführung, mit geringer Wandstärke ausgeführt sein, da die Befestigung der Durchführung anhand der flanschartigen Abwinklungen bewerkstelligt ist, welche durch ihre breitflächige Anlage und robuste Ausführung ein sicheres, vakuumdichtes Verbinden mit den Deckschichten der wärmeisolierenden Wandung ermöglicht, für das eine sichere Prozeßführung mit hoher Prozeßgeschwindigkeit bei geringen Fertigungskosten für die Serienproduktion in der Konsumgüterindustrie sichergestellt ist. Darüber hinaus ist die Möglichkeit, Lagetoleranzen hinsichtlich der Durchbrüche in den Deckschichten auffangen zu können, weiter verbessert.

Besonders einfach und kostengünstig herzustellen ist die Durchführung, wenn nach einer bevorzugten Ausführungsform des Gegenstandes der Erfindung vorgesehen ist, daß der Rohrabschnitt und die flanschähnlichen Abwinklungen mit einem kreisförmigen Querschnitt ausgestattet sind. Der kreisförmige Querschnitt des Rohrabschnittes ermöglicht, daß die an dem Endabschnitt des Rohrabschnittes vorgesehenen Abwinklungen beispielsweise kostengünstig als Stanzteile ausgebildet sein können, welche dann mit dem Rohrabschnitt vakuumdicht verbunden werden.

Nach einer nächsten bevorzugten Ausführungsform des Gegenstandes der Erfindung ist vorgesehen, daß der Rohrabschnitt und die daran angeordnete Abwinklung oder daran angeordneten Abwinklungen einstückig ausgebildet sind.

Für den Fall, daß der Rohrabschnitt und die flanschähnlichen Abwinklungen mit kreisförmigem Querschnitt ausgestattet sind, ist die Durchführung beispielsweise als kostengünstig und präzise herstellbares Drehteil ausführbar, durch dessen präzise Abmessungen und Form die Einbringungen zwischen den Deckschichten der wärmeisolierenden Wandung deutlich erleichtert ist.

Entsprechend einer nächsten bevorzugten Ausführungsform des Gegenstandes der Erfindung ist vorgesehen, daß der Rohrabschnitt einen zumindest im wesentlichen der lichten Weite des Durchbruches entsprechenden Querschnitt aufweist.

Durch die Anpassung des Querschnitts des Rohrabschnittes an die lichte Weite des Durchbruches ist durch einfache Zentriermittel eine besonders genaue Ausrichtung des Durchbruches zum Rohrabschnitt möglich. Darüber hinaus ist gleichzeitig ein Durchführungsquerschnitt für elektrische Leitungen oder für Kältemittel führende Leitungen geschaffen, welcher eine ungehinderte und somit zügige Durchführung dieser Leitungen durch die wärmeisolierende Wandung ermöglicht.

Auf besonders einfache Weise ist eine dauerhaft vakuumdichte Verbindung zwischen den Deckschichten der wärmeisolierenden Wandung und den flanschähnlichen Abwinklungen des Rohrabschnittes herstellbar, wenn nach einer nächsten bevorzugten Ausführungsform des Gegenstandes der Erfindung vorgesehen ist, daß Deckschichten und der Rohrabschnitt mit den daran angeordneten flanschähnlichen Abwinklung oder den daran angeordneten Abwinklungen aus Edelstahl oder Stahl bestehen und durch ein Strahlschweißverfahren miteinander verbunden sind. Als Strahlschweißverfahren bieten sich hierbei das Elektronenstrahlschweißverfahren oder das Laserstrahl-Schweißverfahren besonders an.

Gemäß einer weiteren bevorzugten Ausführungsform des Gegenstandes der Erfindung ist vorgesehen, daß die Schweißverbindung zwischen den Deckschichten und der/den flanschähnlichen Abwinklung(en) im Nahbereich der freien Ränder der flanschähnlichen Abwinklung(en) vorgesehen ist.

Durch eine derartige Anordnung der Schweißnaht ist auch dann eine vakuumdichte Verbindung der Deckschichten mit den flanschähnlichen Abwinklungen sichergestellt, wenn die Durchbrüche in den Deckschichten zueinander, bedingt durch Fertigungsunzulänglichkeiten deutlich versetzt angeordnet sind, so daß die flanschähnliche Abwinklung und der ihm zugeordnete Durchbruch bezüglich ihrer Zentren deutlich versetzt zueinander anzuordnen sind. Außerdem sind die Lufteinschlüsse besonders im Fall des als Durchführung dienenden Rohrabschnittes minimiert.

Besonders dauerhaft und vakuumdicht sind die flanschähnlichen Abwinklungen mit den aus Edelstahl oder korrosionsgeschütztem Stahl gebildeten Deckschichten der wärmeisolierenden Wandungen verschweißbar, wenn nach einer nächsten bevorzugten Ausführungsform des Gegenstandes der Erfindung vorgesehen ist, daß die flanschähnliche Abwinklung oder die flanschähnlichen Abwinklungen mit einer Materialstärke ausgestattet ist oder sind, welche wenigstens der der Materialstärke der Deckschichten entspricht. Je größer die Materialstärke der flanschähnlichen Abwinklung gewählt wird, um so formsteifer ist diese bezüglich ihrer Handhabung im Fertigungsablauf.

Besonders fertigungsfreundlich, prozeßsicher und umweltfreundlich recyclebar ist das wärmeisolierende Gehäuse eines Kältegerätes ausgebildet, wenn nach einer nächsten bevorzugten Ausführungsform des Gegenstandes der Erfindung vorgesehen ist, daß das wärmeisolierende Gehäuse nach einem der Ansprüche 1 bis 8 ausgebildet ist.

Ebenso besonders fertigungsfreundlich, prozeßsicher kostengünstig recyclebar ausgebildet ist die Herdmuffel eines Haushaltsherdes, wenn nach einer letzten bevorzugten Ausführungsform des Gegenstandes der Erfindung vorgesehen ist, daß die Herdmuffel nach einem der Ansprüche 1 bis 8 ausgebildet ist.

Die Erfindung ist in der nachfolgenden Beschreibung anhand eines in der beigefügten Zeichnung vereinfacht dargestellten Ausführungsbeispieles erläutert.

Es zeigen:
- Fig. 1: ein wärmeisolierendes Gehäuse eines Haushalts-Kältegerätes mit an seiner Gehäuserückwand angeordneter Durchführung für Leitungen und mit einem im Bereich seines Maschinenraums vorgesehenen Evakuierstutzen, in Schnittdarstellung von der Seite,
- Fig. 2: ausschnittsweise das wärmeisolierende Gehäuse in Schnittdarstellung, im Bereich der Durchführung in einer gegenüber Fig. 1 um 90° gedrehten Darstellung,
- Fig. 3: ausschnittsweise im vergrößerten Maßstab das wärmeisolierende Gehäuse in Schnittdarstellung im Bereich des Evakuierstutzens, in vergrößertem Maßstab und
- Fig. 4: die Durchführung versetzt zu einem Durchbruch in einer der äußeren Deckschichten eines wärmeisolierenden Gehäuses angeordnet, in Seitenansicht.

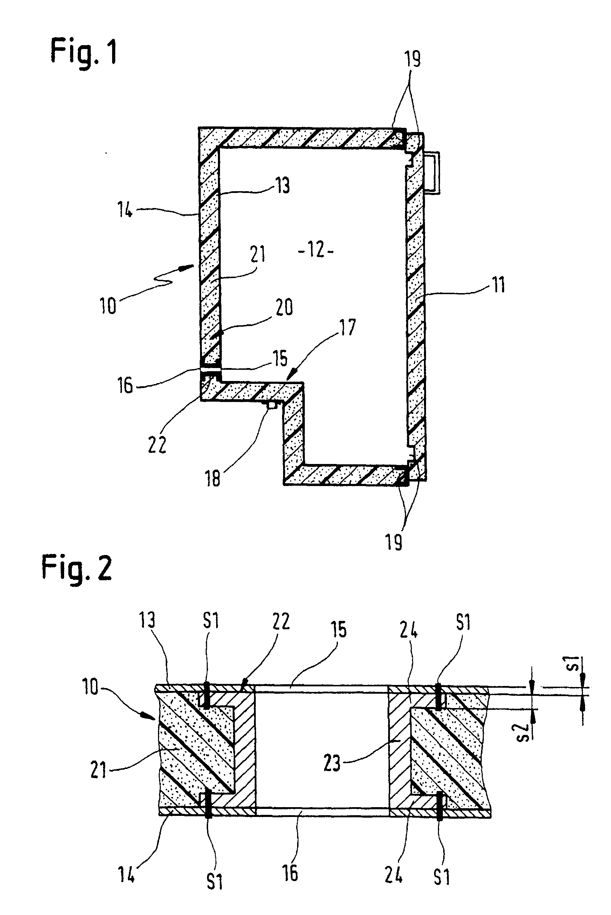

Gemäß Fig. 1 ist ein zur Verwendung für einen Haushalts-Kühl- oder Gefrierschrank geeignetes wärmeisolierendes Gehäuse 10 gezeigt, innerhalb welchem ein über eine Tür 11 zugänglicher Nutzraum 12 vorgesehen ist. Dieser ist von einer als Innenverkleidung dienenden Deckschicht 13 ausgekleidet, zu welcher im Abstand eine als Außenverkleidung ausgebildete Deckschicht 14 angeordnet ist, welche wie die Deckschicht 13 beispielsweise aus Edelstahlblech oder korrosionsgeschütztem Stahlblech mit einer Materialstärke von 0,4 mm geformt ist. Die Deckschichten 13 und 14 sind an ihrer der Tür 11 gegenüberliegenden Rückseite mit je einem im Querschnitt kreiszylindrischen Durchbruch 15 bzw. 16 gleichen Durchmessers versehen, welche einander gemäß einer ersten Anordnungsart zumindest annähernd achsengleich gegenüberliegen. Im Abstand zum Durchbruch 16 ist am horizontalen Abschnitt einer einen Maschinenraum freisparenden Stufe 17 ein weiterer, im Querschnitt kreisförmig ausgebildeter, in die Deckschicht 14 eingebrachter Durchbruch 18 vorgesehen.

Die außenliegende Deckschicht 14 und die dazu beabstandete innere Deckschicht 13 umschließen zusammen mit einem an ihren freien, der Tür 11 zugewandten Rändern vakuumdicht durch Verschweißen festgesetzten Verbindungsprofils 19 aus Edelstahlblech oder korrosionsgeschütztem Stahlblech einen evakuierbaren Zwischenraum 20. Dieser ist zur Abstützung der Deckschichten 13 und 14 mit in Plattenform ausgebildeten, evakuierbaren Wärmeisolationsmaterial 21, z.B. aus offenzelligem Polyurethanschaum oder offenzelligem Polystyrolschaum verfüllt, und von einer die beiden Durchbrüche 15 und 16 miteinander verbindenden, in das Wärmeisolationsmaterial 21 eingebetteten, rohrähnliche Durchführung 22 durchsetzt, welche beispielsweise zum Herausführen von elektrischen Leitungen oder Kältemittel führenden Leitungen aus dem Nutzraum 12 dient.

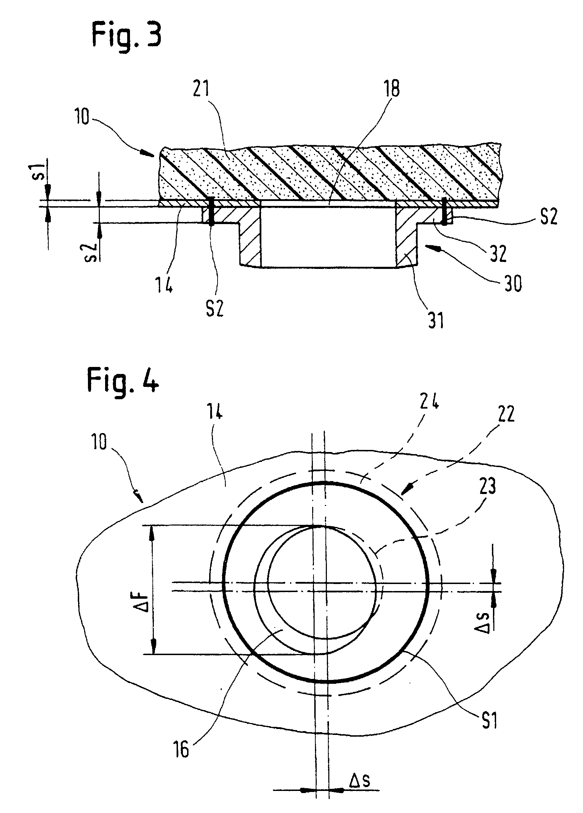

Wie insbesondere aus Fig. 2 hervorgeht, weist die Durchführung 22 einen als Kreishohlzylinder ausgebildeten Rohrabschnitt 23 auf, dessen Öffnungsquerschnitt im wesentlichen an den Querschnitt der Durchbrüche 15 und 16 angepaßt ist und dessen Rohrachse durch den Mittelpunkt der beiden Durchbrüche 15 und 16 verläuft. Der Rohrabschnitt 23 weist an seinen beiden Enden einstückig an seinen Rohrkörper mitangeformte flanschähnliche Abwinklungen 24 auf. Diese sind entlang der Außenkontur des Rohrabschnittes 25 umlaufend angeordnet und liegen mit ihren Außenseiten an den dem Zwischenraum 20 zugewandten Innenseiten der Deckschichten 13 und 14 an. Die flanschähnlichen, im Querschnitt kreisringförmig ausgebildeten Abwinklungen 24 dienen zum vakuumdichten Verbinden der Durchführung 22 mit den Deckschichten 13 und 14 anhand eines Strahlschweißverfahrens, wobei eine hierbei erzeugte, geschlossen ausgeführte kreisförmige Schweißnaht S1 im Nahbereich der freien Ränder der Abwinklungen 24 angeordnet ist und die jeweilig zu verbindenden Verbindungspartner durchdringt. Die Abwinklungen 24 an der Durchführung 22 gestatten, in Kombination mit der im Randbereich der Abwinklungen 24 angeordneten Schweißnaht S1, eine vakuumdichte Verbindung der Durchführung 22 mit den Deckschichten 13 und 14 auch für den Fall, wenn der Rohrabschnitt 23 mit seinem kreisförmigen Umfangsquerschnitt einen Mittelpunktsversatz Δs zum Mittelpunkt einer der Durchbrüche 15 oder 16 aufweist oder die Durchbrüche 15 oder 16 in Form eines Ovals entartet sind oder aber auch der Öffnungsquerschnitt des Rohrabschnittes eine derartige Formänderung ΔF aufweist (siehe hierzu Fig. 4). Durch die Abwinklungen 24 und die Anordnung der Schweißnaht S1 läßt sich ein Mittelpunktversatz zwischen dem Zentrum des Öffnungsquerschnitts des Rohrabschnittes 23 und dem Zentrum des Durchbruches 16 in der Größenordnung von etwa 20 % des Durchmessers des Rohröffnungsquerschnittes der Durchbrüche 15 oder 16 ausgleichen.

Diese Ausgleichsmöglichkeit ergibt sich auch für einen in Fig. 3 gezeigten aus Edelstahl oder korrosionsgeschütztem Stahl gefertigten Evakuierstutzen 30, welcher an der Außenseite der außenliegenden Deckschicht 14 vakuumdicht festgesetzt ist und welcher aus einem hohlzylinderischen Rohrabschnitt 31 und einer an einem seiner Endabschnitte einstückig mit angeformten flanschartigen Abwinklung 32 gebildet ist, welche den Rohrabschnitt 31 konturengetreu umlaufend umgibt. Der Rohrabschnitt 31 ist mit seiner Rohrachse zum Zentrum des im Querschnitt kreisförmig ausgebildeten Durchbruches 18 ausgerichtet, dessen Öffnungsquerschnitt im wesentlichen dem Öffnungsquerschnitt des Rohrabschnittes 31 angepaßt ist, so daß der Durchbruch 18 und Öffnungsquerschnitt des Rohrabschnittes 31 des Evakuierstutzens 30 in einer Flucht liegen. Der Evakuierstutzen 30 ist mit Hilfe seiner Abwinklung 32 vakuumdicht an der Außenseite der außenliegenden Deckschicht 14 durch Strahlschweißen festgesetzt, wobei eine durch den Schweißvorgang erzeugte Schweißnaht S2 kreisringförmig umlaufend im Nahbereich des freien Randes der Abwinklung 32 angeordnet ist und sowohl die Abwinklung 32 als auch die Deckschicht 14 durchsetzt. Um den Schweißvorgang in der Serienfertigung des Gehäuses 10 prozeßsicher ausführen zu können, weist weist sowohl die Abwinklung 32 als auch die Abwinklung 24 eine Materialstärke s2 auf, welche wenigstens den zweifachen Wert der Materialstärke s1 der Deckschicht 13 oder der Deckschicht 14 besitzt.

Die vakuumdichte Befestigung der Durchführung 22 oder des Evakuierstutzens 30 mit der dafür vorgesehenen Abwinklungen 24 bzw. 32 eignet sich nicht nur zur Anwendung in einem wärmeisolierenden Gehäuse für ein Kältegerät, sondern kann genauso auch bei einem wärmeisolierenden Gehäuse für eine Herdmuffel eines Haushaltsherdes eingesetzt werden, wobei die Deckschichten der Herdmuffel wie die des Gehäuses 10 aus Edelstahlblech oder korrosionsgeschütztem Stahlblech gefertigt sein können, jedoch das zur Abstützung dieser Deckschichten nach dem Evakuiervorgang dienende Wärmeisolationsmaterial für im Herdbereich auftretende Temperaturen ausgelegt sein müßte.

Die Schweißverbindung zwischen den Deckschichten und der flanschähnlichen Abwinklung ist auch als Kehlnahtausführung entlang des freien Randes der Abwinklung denkbar.

## Patentansprüche

1. Wärmeisolierende Wandung (10) mit zwei äußeren, im Abstand zueinander angeordneten, zumindest weitestgehend vakuumdichten Deckschichten (13, 14), welche mit einem entlang ihrer Kontur verlaufenden Verbindungsprofil (19) vakuumdicht miteinander verbunden sind und welche zusammen mit dem Verbindungsprofil einen evakuierbaren Zwischenraum (20) umschließen, welcher mit evakuierbarem Wärmeisolationsmaterial (21) verfüllt ist, wobei zumindest eine der Deckschichten einen Durchbruch (15, 16) aufweist, welcher mit einem Rohrabschnitt (31) vakuumdicht verbunden ist, **dadurch gekennzeichnet, daß** der Rohrabschnitt (31) an einem seiner beiden Endabschnitte umlaufend mit einer flanschähnlichen Abwinklung (32) versehen ist, mit welcher der Rohrabschnitt (31) an einer der Deckschichten (13, 14) vakuumdicht festgesetzt ist.

2. Wärmeisolierende Wandung nach Anspruch 1 mit einem im Zwischenraum zwischen den mit Durchbrüchen (18) ausgestatteten Deckschichten angeordneten, die Durchbrüche miteinander verbindenden Rohrabschnitt (23) zur Durchführung von elektrischen Leitungen oder dergleichen, **dadurch gekennzeichnet, daß** der Rohrabschnitt (23) an seinen beiden freien Enden mit einer flanschähnlichen Abwinklung (24) versehen ist, mit welchem der Rohrabschnitt (23) an den einander zugewandten Innenseiten der Deckschichten (13, 14) vakuumdicht festgesetzt ist.

3. Wärmeisolierende Wandung nach Anspruch 1 oder 2, **dadurch gekennzeichnet, daß** der Rohrabschnitt (23, 31) und die flanschähnliche(n) Abwinklung(en) (24, 32) mit einem kreisförmigen Querschnitt ausgestattet sind.

4. Wärmeisolierende Wandung nach einem der Ansprüche 1 bis 3, **dadurch gekennzeichnet, daß** der Rohrabschnitt (23, 31) und die daran angeordnete Abwinklung (32) oder die daran angeordneten Abwinklungen (24) als einstückiges Bauteil ausgebildet sind.

5. Wärmeisolierende Wandung nach einem der Ansprüche 1 bis 4, **dadurch gekennzeichnet, daß** der Rohrabschnitt (23, 31) einen zumindest im wesentlichen der lichten Weite des Durchbruches oder der Durchbrüche (15, 16, 18) entsprechenden Querschnitt aufweist.

6. Wärmeisolierende Wandung nach einem der Ansprüche 1 bis 5, **dadurch gekennzeichnet, daß** die Deckschichten (13, 14) und der Rohrabschnitt (23, 31) mit der daran angeordneten Abwinklung (32) oder den daran angeordneten Abwinklungen (24) aus Edelstahl oder korrosionsgeschütztem Stahl bestehen und durch ein Strahlschweißverfahren miteinander verbunden sind.

7. Wärmeisolierende Wandung nach einem der Ansprüche 1 bis 6, **dadurch gekennzeichnet, daß** die schweißtechnische Verbindung zwischen den Deckschichten (13, 14) und der/den flanschähnlichen Abwinklung(en) (24, 32) im Nahbereich der freien Ränder der flanschähnlichen Abwinklung(en) (24, 32) vorgesehen ist.

8. Wärmeisolierende Wandung nach einem der Ansprüche 1 bis 7, **dadurch gekennzeichnet, daß** die flanschähnliche Abwinklung (32) oder die flanschähnlichen Abwinklungen (24) mit einer Materialstärke ausgestattet ist oder sind, welche wenigstens der Materialstärke der Deckschichten (13,14) entspricht.

9. Kältegerät mit einem wärmeisolierenden Gehäuse, **dadurch gekennzeichnet, daß** das wärmeisolierende Gehäuse (10) nach einem der Ansprüche 1 bis 8 ausgebildet ist.

10. Haushaltsherd mit einem durch eine Tür verschließbaren und von einer Herdmuffel umgrenzten Garraum, **dadurch gekennzeichnet, daß** die Herdmuffel nach einem der Ansprüche 1 bis 8 ausgebildet ist.

## Claims

1. Thermally insulating wall (10) with two outer cover layers (13, 14), which are arranged at a spacing from one another, are at least substantially vacuum-tight, are connected together in vacuum-tight manner by a connecting profile member (19) extending along their profile and enclose together with the connecting profile member an intermediate space (20) which can be evacuated and is filled with evacuatable thermally insulating material (21), wherein at least one of the cover layers has a passage opening (15, 16) which is vacuum-tightly connected with a pipe section (31), **characterised in that** the pipe section (31) is provided at one of its two end portions with an encircling, flange-like angled portion (32) by which the pipe section (31) is fixed in vacuum-tight manner to one of the cover layers (13, 14).

2. Thermally insulating wall according to claim 1 with a pipe section (23), which is arranged in the intermediate space between the cover layers furnished with passage openings (18) and connects the passage openings together, for the guidance through of electrical lines or the like, **characterised in that** the pipe section (23) is provided at its two free ends with a flange-like angled portion (24) by which the pipe section (23) is vacuum-tightly fixed to the mutually facing inner sides of the cover layers (13, 14).

3. Thermally insulating wall according to claim 1 or 2, **characterised in that** the pipe section (23, 31) and the flange-like angled portion or portions (24, 32) are furnished with a circular cross-section.

4. Thermally insulating wall according to one of claims 1 to 3, **characterised in that** the pipe section (23, 31) and the angled portion (32) arranged thereat or the angled portions (24) arranged thereat are constructed as an integral component.

5. Thermally insulating wall according to one of claims 1 to 4, **characterised in that** the pipe section (23, 31) has a cross-section corresponding at least substantially to the clear width of the passage opening or passage openings (15, 16, 18).

6. Thermally insulating wall according to one of claims 1 to 5, **characterised in that** the cover layers (13, 14) and the pipe section (23, 31) together with the angled portion (32) arranged thereat or the angled portions (24) arranged thereat consist of stainless steel or corrosion-protected steel and are connected together by a radiation welding process.

7. Thermally insulating wall according to one of claims 1 to 6, **characterised in that** the welded connection between the cover layers (13, 14) and the flange-like angled portion or portions (24, 32) is provided in the vicinity of the free edges of the flange-like angled portion or portions (24, 32).

8. Thermally insulating wall according to one of claims 1 to 7, **characterised in that** the flange-like angled portion (32) or flange-like angled portions (24) is or are provided with a material thickness corresponding at least to the material thickness of the cover layers (13, 14).

9. Cooling appliance with a thermally insulating housing, **characterised in that** the thermally insulating housing (10) is constructed according to one of claims 1 to 8.

10. Domestic oven with a cooking chamber closable by a door and bounded by an oven muffle, **characterised in that** the oven muffle is constructed according to one of claims 1 to 8.

## Revendications

1. Paroi calorifuge (10) comprenant deux couches de protection (13, 14) extérieures étanches au vide, au moins dans la plus large mesure possible, situées à une distance de l'autre, qui sont reliées l'une à l'autre de manière étanche au vide par un profil de jonction (19) s'étendant le long de leur contour et entourent, avec le profil de jonction, un espace intermédiaire (20) dans lequel on peut faire le vide et qui est rempli d'un matériau calorifuge (21) dont l'air peut être évacué, au moins une des couches de protection étant pourvue d'une ouverture (15, 16) reliée à un segment tubulaire (23) de manière étanche au vide, **caractérisée en ce que** le segment tubulaire (31) est pourvu, au niveau de l'une de ses deux sections finales, d'une partie pliée (32) périphérique similaire à une bride grâce à laquelle le segment tubulaire (31) est fixé de manière étanche au vide sur une des couches de protection (13, 14).

2. Paroi calorifuge selon la revendication 1, comprenant un segment tubulaire (23) qui est situé dans l'espace intermédiaire entre les couches de protection pourvues d'ouvertures (18) et relie ces ouvertures l'une à l'autre, et qui sert à la traversée de fils électriques ou autres éléments similaires, **caractérisée en ce que** le segment tubulaire (23) est pourvu, au niveau de ses deux extrémités libres, d'une partie pliée (24) similaire à une bride grâce à laquelle le segment tubulaire (23) est fixé de manière étanche au vide sur les côtés intérieurs, tournés l'un vers l'autre, des couches de protection (13, 14).

3. Paroi calorifuge selon l'une des revendications 1 ou 2, **caractérisée en ce que** le segment tubulaire (23, 31) et la (les) partie(s) pliée(s) (24, 32) similaire(s) à une (des) bride(s) sont pourvus d'une section transversale circulaire.

4. Paroi calorifuge selon l'une des revendications 1 à 3, **caractérisée en ce que** le segment tubulaire (23, 31) et la partie pliée (32) dont il est pourvu ou les parties pliées (24) dont il est pourvu sont exécutés en tant qu'élément unitaire.

5. Paroi calorifuge selon l'une des revendications 1 à 4, **caractérisée en ce que** le segment tubulaire (31) est pourvu d'une section transversale correspondant, au moins essentiellement, au diamètre intérieur de l'ouverture ou des ouvertures (15, 16, 18).

6. Paroi calorifuge selon l'une des revendications 1 à 5, **caractérisée en ce que** les couches de protection (13, 14) et le segment tubulaire (23, 31) pourvu de la partie pliée (32) ou des parties pliées (24) sont formés d'un acier spécial ou d'un acier anticorrosion et sont reliés l'un à l'autre par un procédé de soudage par rayonnement.

7. Paroi calorifuge selon l'une des revendications 1 à 6, **caractérisée en ce que** la liaison réalisée par une technique de soudure entre les couches de protection (13, 14) et la (les) partie(s) pliée(s) (24, 32) similaire(s) à une (des) bride(s) est prévue dans la zone proche des bords libres de la (des) partie(s) pliée(s) (24, 32) similaire(s) à une (des) bride(s).

8. Paroi calorifuge selon l'une des revendications 1 à 7, **caractérisée en ce que** la partie pliée (32) similaire à une bride ou les parties pliées (24) similaires à des brides présente/nt une épaisseur de matériau qui correspond au moins à l'épaisseur de matériau des couches de protection (13, 14).

9. Appareil réfrigérant pourvu d'un boîtier calorifuge, **caractérisé en ce que** le boîtier calorifuge (10) est exécuté selon une des revendications 1 à 8.

10. Cuisinière domestique comprenant un espace de cuisson entouré par un moufle et pouvant être fermé par une porte, **caractérisée en ce que** le moufle est exécuté selon une des revendications 1 à 8.
